# EUROPÄISCHE PATENTSCHRIFT

(11) **EP 3 339 703 B1**
(45) Veröffentlichungstag und Bekanntmachung des Hinweises auf die Patenterteilung: **10.08.2022**
(21) Anmeldenummer: 17209883.2
(22) Anmeldetag: 21.12.2017
(51) Int. Cl.: F16K 31/06, F16K 27/04, F16H 61/02, F16K 11/07

(54) **SCHIEBERVENTIL MIT KANAL**
GATE VALVE WITH CHANNEL
SOUPAPE À TIROIR POURVUE DE CANAL

(30) Priorität: 23.12.2016 DE 102016125692; 31.03.2017 DE 102017107045
(43) Veröffentlichungstag der Anmeldung: 27.06.2018
(73) Patentinhaber: SVM Schultz Verwaltungs-GmbH & Co. KG, 87700 Memmingen (DE)
(72) Erfinder: Mang, Helmut, 87700 Memmingen (DE); Schreiber, Florian, 89264 Weißenhorn (DE)
(74) Vertreter: Patentanwälte Olbricht, Buchhold, Keulertz Partnerschaft mbB

(56) Entgegenhaltungen:
- WO-A1-2015/055340
- DE-A1-102014 210 530
- US-A1- 2011 240 894
- US-A1- 2015 176 700

## Beschreibung

Die Erfindung betrifft ein Schieberventil, insbesondere für ein Automatikgetriebe eines Kraftfahrzeugs, mit einem Ventilgehäuse, das ein Führungselement aufnimmt, in welchem ein axial bewegbarer Ventilschieber angeordnet ist, und das Ventilgehäuse mindestens einen Druckanschluss und einen von diesem axial beabstandeten Tankanschluss und einen Arbeitsanschluss umfasst, wobei an dem Führungselement mindestens eine mit dem Druckanschluss verbundene Druckanschlussöffnung und eine von dieser axial beabstandeten und mit dem Tankanschluss verbundene Tankanschlussöffnung und eine axial zwischen der Druckanschlussöffnung und der Tankanschlussöffnung angeordnete und mit dem Arbeitsanschluss verbundene Arbeitsanschlussöffnung vorhanden ist, und wobei in dem Ventilgehäuse ein bereichsweise axial verlaufender Kanal vorhanden ist, der die Arbeitsanschlussöffnung mit dem Arbeitsanschluss verbindet.

Ein gattungsgemäßes Schieberventil ist zum Beispiel aus WO 2015/055340 bekannt. Bei dieser Offenbarung ist das Führungselement, die Schieberhülse, vollständig von dem Kunststoff des Ventilgehäuses umspritzt. Daher wird auch der Kanal allseitig von Kunststoff begrenzt. Das hierzu eingesetzte Spritzgusswerkzeug ist aufwendig, was die Herstellung eines solchen Schieberventils verteuert. Gleichzeitig ist der Strömungsquerschnitt dieser Offenbarung relativ gering, was mit relativ hohen Druckverlusten im Betrieb einhergeht.

Auch die japanische Patentanmeldung JP-H07208634 zeigt ein Schieberventil nach dem Stand der Technik, bei welchem das Führungselement kompliziert aufgebaut ist, weil in diesem eine Mehrzahl von Kanäle angeordnet sind, deren Realisierung aufwendig ist.

Die Erfindung hat es sich zur Aufgabe gemacht, diesen Stand der Technik zu verbessern.

Aus der US 2011/240894 A1, der DE 102014210530 A1 und der US 2015/176700 A1 sind jeweils ein Schieberventil mit Ventilgehäuse und Führungselement bekannt.

Ausgehend von einem Schieberventil, wie eingangs beschrieben, schlägt die Erfindung vor, dass der Kanal radial innen von der Außenwand des Führungselementes und radial außen von einer Innenwand des Ventilgehäuses begrenzt ist.

Das Führungselement besteht in der Regel aus einem anderen Material als das Ventilgehäuse. Der Kanal nach der Erfindung wird also von Elementen unterschiedlicher Materialien begrenzt. Dies hat den ersten Vorteil, dass sich die Herstellung eines erfindungsgemäßen Schieberventils verbilligt, weil das erfindungsgemäße Schieberventil mit einfacheren, keine beweglichen Schieber aufweisenden Spritzgusswerkzeuge herstellbar ist.

Im vorgenannten Stand der Technik der WO 2015/055340 wird das Führungselement an seiner Außenseite von dem Kunststoffmaterial des Ventilgehäuses umspritzt. Durch die auf der Au-ßenseite des Führungselementes aufgetragene Wandstärke steht somit im Vergleich mit der erfindungsgemäßen Ausgestaltung, bei sonst gleicher Ausgestaltung und Außendurchmesser, eine kleinere Querschnittsfläche des Kanals zur Verfügung.

Bei der Lösung nach der Erfindung wird weniger Spritzgussmaterial verwendet, was die Herstellungskosten reduziert.

Außerdem verbessert der erfindungsgemäße Vorschlag, der letztendlich zu einer Vergrößerung der Querschnittsfläche des Kanals führt, erheblich die hydraulischen Eigenschaften des erfindungsgemäßen Schieberventils.

Bei gleichen äußeren Abmessungen werden mit dem erfindungsgemäßen Schieberventil geringere Druckabfälle realisiert, was günstig für den Energieverbrauch und den Wirkungsgrad der Anlage ist, in der eine solches Schieberventil eingesetzt ist. Erreicht wird dies dadurch, dass das erfindungsgemäße Schieberventil bei gleichen äußeren Abmessungen größere Strömungsquerschnitte zur Verfügung stellt. Geschickter Weise nützt der erfindungsgemäße Vorschlag die Begrenzungswand von sowieso im Schieberventil bereits vorhandenen Elementen.

Der erfindungsgemäße Vorschlag erlaubt es daher, solche, erfindungsgemäße Schieberventile mit höheren Drücken zu betreiben oder aber kleinere Bauformen, bei ansonsten gleichbleibenden Betriebsparametern, zu realisieren. Der Einsatzbereich solcher erfindungsgemäßer Schiebeventile wird erheblich ausgeweitet.

Für den Fachmann gleichwirkend ist es, wenn die Außenwand des Führungselementes eine Beschichtung oder Schutzschicht trägt, also das blanke Metall durch geeignete Mittel geschützt ist.

Des Weiteren ist nach der Erfindung in vorteilhafter Weise vorgesehen, dass das Führungselement als aus Metall hergestellte Schieberhülse ausgebildet ist, in der die Druckanschlussöffnung, Tankanschlussöffnung und die Arbeitsanschlussöffnung ausgebildet sind.

Es sei verstanden, dass das zu steuernde flüssige oder gasförmige Medium, vorzugsweise das Hydrauliköl des Automatikgetriebes eines Kraftfahrzeuges, am Druckeranschluss in das Schieberventil ein- fließt und am Tankanschluss bzw. Arbeitsanschluss aus dem Schieberventil wieder abfließt. Es sei auch verstanden, dass das zu steuernde Medium an der Druckanschlussöffnung in das Führungselement fließt und an der Tankanschlussöffnung bzw. Arbeitsanschlussöffnung wieder aus dem Führungselement abfließt.

Bei einer bevorzugten Ausgestaltung des Vorschlags ist vorgesehen, dass der Kanal auf Höhe der Druckanschlussöffnung radial innen von der Außenwand des Führungselementes und radial außen von einer Innenwand des Ventilgehäuses begrenzt ist.

In einer bevorzugten Ausgestaltung des erfindungsgemäßen Schieberventiles unterscheidet sich die (in axialer Richtung, bezogen auf die Bewegungsrichtung des Ventilschiebers) Reihenfolge der Anschlüsse an dem Ventilgehäuse von der Reihenfolge der entsprechenden mit den Anschlüssen verbundenen Öffnungen am Führungselement.

So ist zum Beispiel folgende Anschlussreihenfolge vorgesehen: Arbeitsanschluss - Druckanschluss - Tankanschluss. Am Führungselement ist folgende Reihenfolge der Öffnungen beispielsweise vorgesehen: Druckanschlussöffnung - Arbeitsanschlussöffnung - Tankanschlussöffnung.

Bei dieser speziellen Anschlusswahl kreuzen sich letztendlich die Verbindungsleitungen zwischen den jeweiligen Anschlüssen und Öffnungen von Druckanschluss und Arbeitsanschluss.

Durch die hier nun vorgeschlagene konstruktive Lösung, dass der Kanal auf Höhe der Druckanschlussöffnung radial innen von der Außenwand des Führungselementes und radial außen von einer Innenwand des Ventilgehäuses begrenzt ist, wird erheblich Platz gespart und doch ein ausreichend großer Querschnitt für die Leitung des zu steuernden Mediums geschaffen.

Bei einer bevorzugten Ausgestaltung des Vorschlags ist vorgesehen, dass das Führungselement als vom Ventilgehäuse getrenntes Bauelement gebildet ist.

Erfindungsgemäß ist vorgesehen, dass die Außenwand des Führungselementes aus Metall besteht.

Erfindungsgemäß ist vorgesehen, dass das Ventilgehäuse und auch dessen Innenwand aus Kunststoff, insbesondere einem Spritzguss-Kunststoff besteht, welcher das Führungselement umgibt.

Dem Fachmann sind spritzgussfähige Kunststoffe hinlänglich bekannt. Es handelt sich dabei oftmals um Thermoplaste. Die hier verwendeten Kunststoffe diese können auch (glas- oder kohle-) faser- oder perlenverstärkt sein.

Geschickter Weise ist vorgesehen, dass das Ventilgehäuse an seinem axialen Ende einen Filterkorb trägt, in den auch der Arbeitsanschluss mündet und der Filterkorb eine erste Durchlassöffnung für den Arbeitsanschluss aufweist.

Alternativ ist es auch möglich, dass der Filterkorb einstückig in das Ventilgehäuse integriert ist.

In einer weiteren bevorzugten Ausführungsform ist vorgesehen, dass der Filterkorb eine radial angeordnete zweite Durchlassöffnung für den Druckanschluss aufweist.

Des Weiteren ist günstiger Weise vorgesehen, dass der Ventilschieber einen Durchflusskanal aufweist, der durch eine erste und zweite Steuerkante begrenzt ist.

Der Durchflusskanal wird durch Bund auf Ventilschieber, einer Verjüngung definiert. Es resultiert eine kompakte Bauweise.

Erfindungsgemäß ist vorgesehen, dass das, dem Filterkorb zugewandte Ende des Führungselementes, vom Kunststoffmaterial des Ventilgehäuses freigestellt ist und dieses Ende eine Abstützkappe trägt, in der sich eine auf den Ventilschieber wirkende Rückstellfeder abstützt.

Die Abstützkappe ist auf dem Führungselement aufgepresst oder auf- geschoben. Sie beschreibt für die Rückstellfeder eine definierte Lage, auch bei Temperaturänderungen. Es ist mindestens eine Durchlassöffnung (bevorzugt im Boden der hutartigen Abstützkappe) für einen Druckausgleich zwischen dem Hülseninneren und dem Arbeitsanschluss vorgesehen, wodurch eine schnelle Schaltbewegung des Ventilschiebers unterstützt wird.

Erfindungsgemäß ist vorgesehen, dass der Kanal mindestens einen axial verlaufenden Teilkanal umfasst, welche, bezogen auf den Druckanschluss und/oder dem Tankanschluss um 90° in Umfangsrichtung versetzt ist.

Der Begriff Umfangsrichtung sei verstanden in Richtung des Umfanges, bezogen auf die Mittelachse des Ventilschiebers (welche parallel zu seiner Längsbeweglichkeit ist).

Erfindungsgemäß ist vorgesehen, dass der axiale Teil-Kanal zumindest abschnittsweise einen in etwa kreissegmentförmigen oder sichelförmigen Querschnitt aufweist.

Des Weiteren ist vorgesehen, dass eine Elektromagneteinheit vorgesehen ist, dessen Anker auf den Ventilschieber, gegen die Kraft der Rückstellfeder wirkt.

In einer vorteilhaften Ausgestaltung ist vorgesehen, dass das Führungselement eine Abflachung der Ausnehmung aufweist und die Abflachung oder Ausnehmung Bestandteil des Kanals oder des mindestens einen der axialen Teil-Kanals ist.

Des Weiteren ist vorgesehen, dass an dem Ventilgehäuse ein radialer Druckanschluss vorgesehen ist. Der Vorschlag ist bei der Anordnung der verschiedenen Anschlüsse sehr variabel. Die Anschlüsse können zum Beispiel einfach oder auch mehrfach an der Stirnseite des Ventilgehäuses, an der offenen Seite des Führungselementes vorgesehen sein. Ein Teil oder auch alle Anschlüsse können aber auch, bezogen auf die Bewegungsrichtung des Ventilschiebers, radial am Ventilgehäuse angeordnet sein.

So ist zum Beispiel auch in einer vorteilhaften Ausgestaltung vorgesehen, dass an dem Ventilgehäuse ein radialer Tankanschluss vorgesehen ist.

Geschickter Weise ist daher auch vorgesehen, dass an dem Ventilgehäuse ein stirnseitiger Arbeitsanschluss vorgesehen ist.

Des Weiteren ist in dem Vorschlag vorteilhafter Weise vorgesehen, dass der axial verlaufende Kanal unmittelbar in den stirnseitig vorgesehenen Arbeitsanschluss mündet. Dies führt zu einer sehr platzsparenden Realisierung.

Des Weiteren umfasst die Erfindung auch ein Automatikgetriebe mit einem solchen Schieberventil.

In der Zeichnung ist die Erfindung insbesondere in einem Ausführungsbeispiel schematisch dargestellt. Es zeigen:

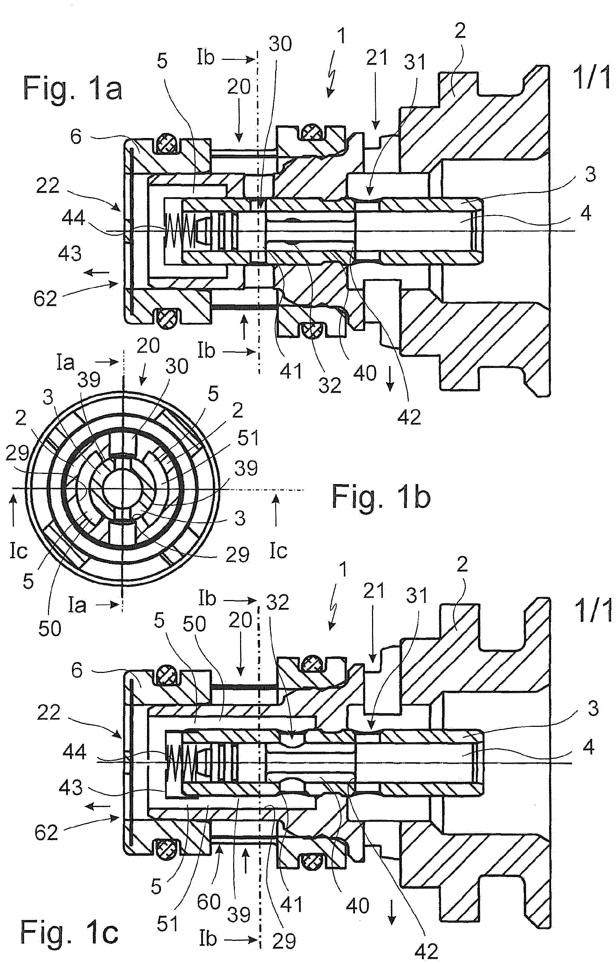

- Fig. 1a und 1c: je in einem Längsschnitt das erfindungsgemäße Schieberventil, wobei die Schnittebenen zueinander um 90° verdreht sind, siehe Fig. 1b
- Fig. 1b: ein Querschnitt des erfindungsgemäßen Schieberventils nach Fig. 1a und 1c, mit den jeweiligen Schnittlinien 1a - 1a und 1c - 1c.

Figur 1a und Figur 1c zeigen das erfindungsgemäße Schieberventil 1 in zwei verschiedenen, um 90° gedrehten Schnittansichten. Da sich der erfindungsgemäße Vorschlag insbesondere sehr deutlich aus Figur 1c ergibt, wird das Schieberventil 1 zunächst anhand von dieser Figur beschrieben.

Das Schiebeventil 1 ist in einem Ventilgehäuse 2 angeordnet. Das Ventilgehäuse 2 wird mit einer Antriebseinheit, hier zum Beispiel eine nicht dargestellte Elektromagneteinheit verbunden, die in der gezeigten Situation an der rechten Seite an das Ventilgehäuse 2 angeschlossen wird. Das Ventilgehäuse 2 besitzt einen Druckanschluss 20 und einen Tankanschluss 21, die an dem Ventilgehäuse 2 radial, bezogen auf die Längserstreckung des Ventilgehäuses 2 oder der Bewegungsrichtung des Ventilschiebers 4 (wobei radial hierzu rechtwinklig bedeutet), angeordnet sind. Die Strömungsrichtung des Fluids ist mit einem Pfeil gekennzeichnet. Das Fluid, z. B. Hydrauliköl, strömt durch den Druckanschluss 20 in das Schieberventil 2 ein und verlässt dieses, je nach Regelstellung des Ventilschiebers 4, an dem stirnseitig angeordneten Arbeitsanschluss 22 oder strömt über den Tankanschluss 21 zum Vorratstank zurück.

Die Anordnung ist dabei so gewählt, dass der Druckanschluss 20 an dem Ventilgehäuse 2 zwischen dem Tankanschluss 21 und dem Arbeitsanschuss 22 angeordnet ist, wobei der Arbeitsanschluss 22 stirnseitig am Ventilgehäuse 2 ausgelegt ist derart, dass die Strömungsrichtung des ausfließenden Fluids hier rechtwinklig ist zur Strömungsrichtung des Fluids des am Druckanschluss 20 einschließenden Fluids.

In dem Ventilgehäuse 2 ist das Führungselement 3 gelagert. Das Führungselement 3 ist üblicherweise als Schieberhülse 38 ausgebildet und besteht aus Metall. Das Ventilgehäuse 2 besteht aus Kunststoff, welches in einem Spritzgussverfahren um das Führungselement 3 gespritzt ist wobei das Führungselement 3 mehrere Öffnungen auf- weist, die von dem Kunststoffmaterial des Ventilgehäuses 2 nicht verdeckt wird. Im Übrigen ist auch das Führungselement 3 nicht vollständig umspritzt, sondern seine Außenwand 39 wird als Begrenzungswand 29 eines Kanals 5 genutzt.

Das hülsenartige Führungselement 3 ist beidseitig am Ende offen und besitzt an seiner Mantelfläche mehrere radial angeordnete Öffnungen, die die Materialstärke der Hülse vollständig durchdringen. An der rückseitigen, der Elektromagneteinheit zugewandten Seite des Führungselements 3/der Schiebehülse 38 ist die Tankanschlussöffnung 31 angeordnet, die hydraulisch leitend verbunden ist mit dem Tankanschluss 21. Das Verbindungsstück zwischen Tankanschlussöffnung 31 und Tankanschluss 21 verläuft im Wesentlichen radial, bezogen auf die Längsbeweglichkeit des Ventilschiebers 4. Axial, bezogen auf die Längsbeweglichkeit des Ventilschiebers 4, weiter von der Elektromagneteinheit entfernt, fast am anderen Ende (im letzten Drittel) des Führungselements 3/der Schiebehülse 38, befindet sich an dem Führungselement 3/der Schiebehülse 38 die Druckanschlussöffnung 3O, die hydraulisch leitend verbunden ist mit dem Druckanschluss 20. Auch das Verbindungsstück zwischen Druckanschlussöffnung 30 und Druckanschluss 20 ist im Wesentlichen radial, bezogen auf die Längsbeweglichkeit des Ventilschieber 4, orientiert.

Zwischen der Druckanschlussöffnung 30 und der Tankanschlussöffnung 3, ist an dem Führungselement 3/der Schiebehülse 38 fast mittig angeordnet, die Arbeitsanschlussöffnung 32 vorgesehen. Die Arbeitsanschlussöffnung 32 ist mit dem vorne, auf der der Elektromagneteinheit abgewandten Seite des Ventilgehäuses 2, stirnseitig angeordneten Arbeitsanschluss 22 durch den in axialer Richtung (bezogen auf die Längsbeweglichkeit des Ventilschiebers 4) verlaufenden Kanal 5 verbunden.

Um nicht mit dem radial verlaufenden Verbindungsstück zwischen dem Druckanschluss 20 und der Druckanschlussöffnung 30 zu kollidieren, befindet sich der Kanal 5 nicht in dem gesamten Kreisring, sondern nur in einem Kreisringsegment, wie dies zum Beispiel in Figur 1b gezeigt ist.

In dem Führungselement 3/Schiebehülse 38 ist der Ventilschieber 4 längsbeweglich gelagert. Rückseitig, auf der dem Arbeitsanschluss 22 abgewandten Seite, wirkt der Ventilschieber 4 zusammen mit einem nicht gezeigten Anker der Elektromagneteinheit. Am gegenüber- liegenden, vorderen Ende des Ventilschiebers 4 ist dieser konisch ausgebildet, auf diesem Konus stützt sich die Rückstellfeder 44 ab. Geschickter Weise ist vorgesehen, dass an dem zylinderartigen Ventilschieber 4 eine Verjüngung vorgesehen ist, die so einen Durchflusskanal 40 definiert, der in Richtung des Arbeitsanschlusses 22 von einer ersten Steuerkarte 41 und rückseitig von einer zweiten Steuerkarte 42 begrenzt wird. Diese sehr schlanke Bauform spart Platz, da der notwendige Durchflusskanal 40 zwischen den verschiedenen Öffnungen, der Druckanschlussöffnung 30, der Tankanschlussöffnung 31 und der Arbeitsanschlussöffnung 32 nicht in der Wandung des Führungselementes 3 / Schiebehülse 38 angeordnet ist. Ein solcher Vorschlag erlaubt eine kompakte Bauweise.

Es wurde bereits darauf hingewiesen, dass das Führungselement 3/ Schieberhülse 38 nicht vollständig von dem Kunststoffmaterial des Ventilgehäuses 2 umspritzt ist, sondern der vordere, dem Arbeitsanschluss 22 zugewandte Bereich des Führungselementes 3 frei oder blank ist. Diese konstruktive Ausgestaltung erlaubt zunächst, dass für den Kanal 5 ein großer Strömungsquerschnitt zur Verfügung steht, da der Kanal 5 von der Außenwand 39 des Führungselementes 3/ Schieberhülse 38 begrenzt ist. Zusätzliches Kunststoffmaterial an dieser Stelle wäre nachteilig, da es nur den Strömungsquerschnitt verringert und somit den Druckabfall bzw. Druckverlust erhöht. Des Weiteren wird auf das Metallende des Führungselementes 3/ Schieberhülse 38 eine Abstützkappe 43 aufgesetzt, aufgepresst oder auf- gesteckt, in jedem Fall fest angeordnet, an deren Boden sich die Rückstellfeder 44, die auf dem Konus des Ventilschieber 4 aufgesteckt ist, abstützt.

Da hier eine aus Metall, zum Beispiel Stahl, bestehende Abstützkappe 43 auf dem, aus Metall, zum Beispiel Stahl gebildeten Führungselement 3 aufgesteckt (aufgepresst) ist, ist das Temperaturverhalten gut bekannt und damit eine hohe Betriebssicherheit gegeben, das sich an diesen Elementen die Rückstellfeder 44, die maßgeblich für die Position des Ventilschieber 4 relativ zu den verschiedenen Öffnungen, bei entsprechender Bestromung, verantwortlich ist, stützt.

Endseitig, auf der der Elektromagneteinheit abgewandten Seite des Ventilgehäuses 2, ist ein Filterkorb 6 aufgesteckt, bzw. aufgepresst. In Richtung der Elektromagneteinheit endet der Filterkorb zwischen dem Tankschuss 21 und dem Druckanschluss 20. Der Filterkorb 6 besitzt Durchlassöffnungen 60, 62, die mit einem Filtergewebe ausgekleidet sind und so eine Filterfunktion wahrnehmen und vermeiden, dass Metallspäne in den sensiblen Innenraum des Ventilgehäuses 2 gelangen. Dabei ist die Durchlassöffnung 60 dem Druckanschluss 20 zugeordnet, am Boden des topfartigen Filterkorbes 6 befindet sich die ebenfalls mit Filtergewebe verkleidete Durchlassöffnung 62, die den Arbeitsausschuss 22 verdeckt. Zusätzlich trägt der Filterkorb 6 an seiner Außenseite zwei O-Ringdichtungen, um in der Einbausituation abzudichten.

In den Figuren sind gleiche oder einander entsprechende Elemente jeweils mit den gleichen Bezugszeichen bezeichnet und werden da- her, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z. B. oben, unten, seitlich usw. auf die unmittelbar beschriebene sowie dargestellte Figur bezogen und sind bei einer Lageänderung sinngemäß auf die neue Lage zu übertragen.

## Patentansprüche

1. Schieberventil, insbesondere für ein Automatikgetriebe eines Kraftfahrzeugs, mit einem Ventilgehäuse (2), das ein Führungselement (3) aufnimmt, in welchem ein axial bewegbarer Ventilschieber (4) angeordnet ist, und das Ventilgehäuse (2) mindestens einen Druckanschluss (20) und einen von diesem axial beabstandeten Tankanschluss (21) und einen Arbeitsanschluss (22) umfasst, wobei an dem Führungselement (3) mindestens eine mit dem Druckanschluss (20) verbundene Druckanschlussöffnung (30) und eine von dieser axial beabstandeten und mit dem Tankanschluss (21) verbundene Tankanschlussöffnung (31) und eine axial zwischen der Druckanschlussöffnung (30) und der Tankanschlussöffnung (31) angeordnete und mit dem Arbeitsanschluss (22) verbundene Arbeitsanschlussöffnung (32) vorhanden ist, wobei in dem Ventilgehäuse (2) ein bereichsweise axial verlaufender Kanal (5) vorhanden ist, der die Arbeitsanschlussöffnung (32) mit dem Arbeitsanschluss (22) verbindet, wobei der Kanal (5) mindestens einen axial verlaufenden Teilkanal (50, 51) umfasst, welcher, bezogen auf den Druckanschluss (20) und/oder den Tankanschluss (21) um 90° in Umfangsrichtung versetzt ist, wobei der axiale Teilkanal (50, 51) zumindest abschnittsweise einen in etwa kreissegmentförmigen oder sichelförmigen Querschnitt aufweist, wobei der Kanal (5) radial innen von der Außenwand (39) des Führungselementes (3) und radial außen von einer Innenwand (29) des Ventilgehäuses (2) begrenzt ist, wobei die Außenwand (39) des Führungselementes (3) aus Metall besteht, und wobei das Ventilgehäuse (2) und auch dessen Innenwand (29) aus Kunststoff besteht, welcher das Führungselement (3) umgibt, **dadurch gekennzeichnet, dass** das Führungselement (3) nicht vollständig von dem Kunststoffmaterial des Ventilgehäuses (2) umspritzt ist, sondern der vordere, dem Arbeitsanschluss (22) zugewandte Bereich des Führungselementes (3) frei ist,
wobei das dem Arbeitsanschluss (22) zugewandte Metallende des Führungselementes (3) vom Kunststoffmaterial des Ventilgehäuses (2) freigestellt ist und darauf eine Abstützkappe (43) fest angeordnet ist, an deren Boden sich eine auf den Ventilschieber (4) wirkende Rückstellfeder (44) abstützt.

2. Schieberventil nach Anspruch 1, **dadurch gekennzeichnet, dass** das Führungselement (3) als aus Metall hergestellte Schieberhülse (38) ausgebildet ist, in der die Druckanschlussöffnung (30), Tankanschlussöffnung (31) und die Arbeitsanschlussöffnung (32) ausgebildet sind.

3. Schieberventil nach einem der vorhergehenden Ansprüche, **dadurch gekennzeichnet, dass** der Kanal (5) auf Höhe der Druckanschlussöffnung (30) radial innen von der Außenwand (39) des Führungselementes (3) und radial außen von einer Innenwand (29) des Ventilgehäuses (2) begrenzt ist.

4. Schieberventil nach einem der vorhergehenden Ansprüche, **dadurch gekennzeichnet, dass** das Führungselement (3) als vom Ventilgehäuse (2) getrenntes Bauelement gebildet ist.

5. Schieberventil nach einem der vorhergehenden Ansprüche, **dadurch gekennzeichnet, dass** das Ventilgehäuse (2) und auch dessen Innenwand (29) aus einem Spritzguss-Kunststoff besteht.

6. Schieberventil nach einem der vorhergehenden Ansprüche, **dadurch gekennzeichnet, dass** das Ventilgehäuse (2) an seinem axialen Ende einen Filterkorb (6) trägt, in den auch der Arbeitsanschluss (22) mündet und der Filterkorb (6) eine erste Durchlassöffnung (62) für den Arbeitsanschluss (22) aufweist.

7. Schieberventil nach Anspruch 6, **dadurch gekennzeichnet, dass** der Filterkorb (6) eine radial angeordnete zweite Durchlassöffnung (60) für den Druckanschluss (20) aufweist.

8. Schieberventil nach einem der vorhergehenden Ansprüche, **dadurch gekennzeichnet, dass** der Ventilschieber (4) einen Durchflusskanal (40) aufweist, der durch eine erste (41) und zweite (42) Steuerkante begrenzt ist.

9. Schieberventil nach einem der vorhergehenden Ansprüche, **dadurch gekennzeichnet, dass** eine Elektromagneteinheit vorgesehen ist, dessen Anker auf den Ventilschieber (4), gegen die Kraft der Rückstellfeder (44) wirkt.

10. Schieberventil nach einem der vorhergehenden Ansprüche, **dadurch gekennzeichnet, dass** das Führungselement (3) eine Abflachung oder Ausnehmung aufweist und die Abflachung oder Ausnehmung Bestandteil des Kanals (5) oder des mindestens einen der axialen Teil-Kanals (50, 51) ist.

11. Schieberventil nach einem der vorhergehenden Ansprüche, **dadurch gekennzeichnet, dass** der axial verlaufende Kanal unmittelbar in den stirnseitig vorgesehenen Arbeitsanschluss (22) mündet und/oder an dem Ventilgehäuse (2) ein radialer Druckanschluss (20) vorgesehen ist und/oder an dem Ventilgehäuse (2) ein radialer Tankanschluss (21) vorgesehen ist und/oder an dem Ventilgehäuse (2) ein stirnseitiger Arbeitsanschluss (22) vorgesehen ist.

## Claims

1. Gate valve, in particular for an automatic transmission of a motor vehicle, comprising a valve housing (2) which accommodates a guide element (3) in which an axially movable valve gate (4) is arranged, and the valve housing (2) comprises at least one pressure connection (20) and a tank connection (21) axially spaced therefrom and a working connection (22), wherein at least one pressure connection opening (30) connected to the pressure connection (20) and a tank connection opening (31) axially spaced therefrom and connected to the tank connection (21) and a working connection opening (32) axially arranged between the pressure connection opening (30) and the tank connection opening (31) and connected to the working connection (22) are present on the guide element (3), wherein a channel (5) that in regions extends axially is present in the valve housing (2) and connects the working connection opening (32) to the working connection (22), wherein the channel (5) comprises at least one axially extending partial channel (50, 51) which is offset by 90° in the circumferential direction with respect to the pressure connection (20) and/or the tank connection (21), wherein the axial partial channel (50, 51) has, at least in portions, an approximately circular-segment-shaped or sickle-shaped cross-section, wherein the channel (5) is bounded radially inwardly by the outer wall (39) of the guide element (3) and radially outwardly by an inner wall (29) of the valve housing (2), wherein the outer wall (39) of the guide element (3) consists of metal, and wherein the valve housing (2) and also its inner wall (29) consists of plastic, which surrounds the guide element (3), **characterised in that** the guide element (3) is not completely encapsulated by the plastic material of the valve housing (2), but rather the front region of the guide element (3) facing the working connection (22) is free,
wherein the metal end of the guide element (3) facing the working connection (22) is kept free from the plastic material of the valve housing (2) and a support cap (43) is fixedly arranged thereon, on the base of which a return spring (44) acting on the valve gate (4) is supported.

2. Gate valve according to claim 1, **characterised in that** the guide element (3) is formed as a gate valve sleeve (38) made of metal, in which the pressure connection opening (30), tank connection opening (31) and the working connection opening (32) are formed.

3. Gate valve according to any one of the preceding claims, **characterised in that** the channel (5) is bounded radially inwardly at the level of the pressure connection opening (30) by the outer wall (39) of the guide element (3) and radially outwardly by an inner wall (29) of the valve housing (2).

4. Gate valve according to any one of the preceding claims, **characterised in that** the guide element (3) is formed as a component separate from the valve housing (2).

5. Gate valve according to any one of the preceding claims, **characterised in that** the valve housing (2) and also its inner wall (29) are made of an injection-moulded plastic.

6. Gate valve according to any one of the preceding claims, **characterised in that** the valve housing (2) carries at its axial end a filter basket (6) into which the working connection (22) also opens, and the filter basket (6) has a first passage opening (62) for the working connection (22).

7. Gate valve according to claim 6, **characterised in that** the filter basket (6) has a radially arranged second passage opening (60) for the pressure connection (20).

8. Gate valve according to any one of the preceding claims, **characterised in that** the valve gate (4) has a flow channel (40) delimited by first (41) and second (42) control edges.

9. Gate valve according to any one of the preceding claims, **characterised in that** an electromagnet unit is provided, the armature of which acts on the valve gate (4), against the force of the return spring (44).

10. Gate valve according to any one of the preceding claims, **characterised in that** the guide element (3) has a flattening or recess and the flattening or recess is part of the channel (5) or of at least one of the axial partial channels (50, 51).

11. Gate valve according to any one of the preceding claims, **characterised in that** the axially extending channel opens directly into the working connection (22) provided on the end face and/or a radial pressure connection (20) is provided on the valve housing (2) and/or a radial tank connection (21) is provided on the valve housing (2) and/or a working connection (22) is provided on the end face of the valve housing (2).

## Revendications

1. Soupape à tiroir, en particulier pour une transmission automatique d'un véhicule automobile, comportant un boîtier de soupape (2) qui reçoit un élément de guidage (3) dans lequel est disposé un tiroir de soupape (4) mobile axialement, et le boîtier de soupape (2) présente au moins un raccord de pression (20) et un raccord de réservoir (21) espacé axialement de celui-ci et un raccord de travail (22), dans laquelle au niveau de l'élément de guidage (3), au moins une ouverture de raccord de pression (30) reliée au raccord de pression (20) et une ouverture de raccord de réservoir (31) espacée axialement de celle-ci et reliée au raccord de réservoir (21) et une ouverture de raccord de travail (32) agencée axialement entre l'ouverture de raccord de pression (30) et l'ouverture de raccord de réservoir (31) et reliée au raccord de travail (22) sont fournies, dans laquelle un canal (5) s'étendant axialement dans certaines zones du boîtier de soupape (2) est fourni, qui relie l'ouverture de raccord de travail (32) au raccord de travail (22), dans laquelle le canal (5) présente au moins un canal partiel s'étendant axialement (50, 51), qui est décalé de 90° dans la direction circonférentielle par rapport au raccord de pression (20) et/ou au raccord de réservoir (21), dans laquelle le canal partiel axial (50, 51) présente au moins par endroits une section transversale sensiblement en forme de segment circulaire ou en forme de croissant, dans laquelle le canal (5) étant délimité radialement à l'intérieur par la paroi extérieure (39) de l'élément de guidage (3) et radialement à l'extérieur par une paroi intérieure (29) du boîtier de soupape (2), dans laquelle la paroi extérieure (39) de l'élément de guidage (3) est en métal, et dans laquelle le boîtier de soupape (2) ainsi que sa paroi intérieure (29) sont en plastique, entourant l'élément de guidage (3), **caractérisé en ce que** l'élément de guidage (3) n'est pas entièrement enrobé par la matière plastique du boîtier de soupape (2), la zone avant de l'élément de guidage (3) tournée vers le raccord de travail (22) étant libre,
dans laquelle l'extrémité métallique de l'élément de guidage (3) tournée vers le raccord de travail (22) est exempte de la matière plastique du boîtier de soupape (2) et un capuchon de support (43) est disposé fixement dessus, sur le fond duquel un ressort de rappel (44) agissant sur le tiroir de soupape (4) est supporté.

2. Soupape à tiroir selon la revendication 1, **caractérisée en ce que** l'élément de guidage (3) est réalisé sous la forme d'un manchon coulissant (38) fabriqué en métal, dans lequel l'ouverture de raccord de pression (30), l'ouverture de raccord de réservoir (31) et l'ouverture de raccord de travail (32) sont formées.

3. Soupape à tiroir selon l'une quelconque des revendications précédentes, **caractérisée en ce que** le canal (5) au niveau de l'ouverture de raccord de pression (30) est délimité radialement à l'intérieur par la paroi extérieure (39) de l'élément de guidage (3) et radialement à l'extérieur par une paroi intérieure (29) du boîtier de soupape (2).

4. Soupape à tiroir selon l'une quelconque des revendications précédentes, **caractérisée en ce que** l'élément de guidage (3) est réalisé sous la forme d'un composant séparé du boîtier de soupape (2).

5. Soupape à tiroir selon l'une quelconque des revendications précédentes, **caractérisée en ce que** le boîtier de soupape (2) ainsi que sa paroi intérieure (29) sont constitués d'une matière plastique moulée par injection.

6. Soupape à tiroir selon l'une quelconque des revendications précédentes, **caractérisée en ce que** le boîtier de soupape (2) porte à son extrémité axiale un panier filtrant (6) dans lequel débouche également le raccord de travail (22), et le panier filtrant (6) présente un première ouverture de passage (62) pour le raccord de travail (22).

7. Soupape à tiroir selon la revendication 6, **caractérisée en ce que** le panier filtrant (6) présente une seconde ouverture de passage (60) agencée radialement pour le raccord de pression (20).

8. Soupape à tiroir selon l'une quelconque des revendications précédentes, **caractérisée en ce que** le tiroir de soupape (4) présente un canal d'écoulement (40) qui est délimité par une première (41) et une seconde (42) arête de commande.

9. Soupape à tiroir selon l'une quelconque des revendications précédentes, **caractérisée en ce qu'**une unité électromagnétique est prévue, dont l'armature agit sur le tiroir de soupape (4) à l'encontre de la force du ressort de rappel (44).

10. Soupape à tiroir selon l'une quelconque des revendications précédentes, **caractérisée en ce que** l'élément de guidage (3) présente un méplat ou un évidement, et le méplat ou l'évidement fait partie du canal (5) ou d'au moins l'un des canaux partiels axiaux (50, 51).

11. Soupape à tiroir selon l'une quelconque des revendications précédentes, **caractérisée en ce que** le canal s'étendant axialement débouche directement dans le raccord de travail (22) prévu sur le côté avant et/ou un raccord de pression radial (20) est prévu sur le boîtier de soupape (2) et/ou un raccord de réservoir radial (21) est prévu sur le boîtier de soupape (2) et/ou un raccord de travail côté avant (22) est prévu sur le boîtier de soupape (2).
